# EUROPÄISCHE PATENTSCHRIFT

(11) **EP 4 067 647 B1**
(45) Veröffentlichungstag und Bekanntmachung des Hinweises auf die Patenterteilung: **04.03.2026**
(21) Anmeldenummer: 21165600.4
(22) Anmeldetag: 29.03.2021
(51) Int. Cl.: F03D 13/20, F03D 80/00

(54) **MASCHINENTRÄGER UND WINDENERGIEANLAGE MIT EINEM SOLCHEN MASCHINENTRÄGER**
MACHINE SUPPORT AND WIND TURBINE WITH SUCH A MACHINE SUPPORT
SUPPORT DE MACHINE ET ÉOLIENNE DOTÉE D'UN TEL SUPPORT DE MACHINE

(43) Veröffentlichungstag der Anmeldung: 05.10.2022
(73) Patentinhaber: Wobben Properties GmbH, 26607 Aurich (DE)
(72) Erfinder: Sartorius, Florian, 26789 Leer (DE); Lambertz, Walter, 26605 Aurich (DE)
(74) Vertreter: Eisenführ Speiser

(56) Entgegenhaltungen:
- EP-A1- 2 740 928
- WO-A1-2018/141523
- US-A1- 2011 316 278
- US-A1- 2016 131 112

## Beschreibung

Die Erfindung bezieht sich auf einen Maschinenträger für eine Windenergieanlage, insbesondere eine getriebelose Windenergieanlage, wobei der Maschinenträger dazu eingerichtet ist, gemäß den Merkmalen des Oberbegriffs von Anspruch 1. Die Erfindung bezieht sich des Weiteren auch auf eine Windenergieanlage mit einem solchen Maschinenträger.

Windenergieanlagen sind allgemein bekannt. Sie weisen einen Turm auf, auf dessen oberem Ende eine Gondel drehbar gelagert ist. Im Inneren der Gondel ist häufig ein Maschinenträger angeordnet, der einerseits einen Generator, eine Antriebswelle für den Generator, optional ein Getriebe, und eine Rotornabe mit mehreren Rotorblättern trägt, die zum Antrieb des Generators im Wind rotieren. Der Generator weist üblicherweise einen vom Maschinenträger fest aufgenommenen Generatorstator und einen relativ zu dem Generatorstator, innen oder außen, umlaufenden Generatorrotor auf. Maschinenträger der vorbezeichneten Art werden also mit anderen Worten dazu verwendet, die Gondel und ihre funktionalen Bestandteile mit dem Turm der Windenergieanlage zu verbinden.

Aus DE 10 2014 206 703 A1 ist ein Maschinenträger der vorbezeichneten Gattung bekannt, der über ein Azimutlager drehbar mit dem oberen Ende des Turmes verbunden ist, wobei der Maschinenträger mittels des Azimutlagers um die Turmachse gedreht werden kann. Der Maschinenträger weist eine Tragstruktur auf, die eine erste mechanische Schnittstelle zum mittelbaren oder unmittelbaren Verbinden des Maschinenträgers mit dem Azimutlager und eine zweite mechanische Schnittstelle zur Montage eines Generators oder eines Achszapfens zum Tragen eines Generators mit dem Maschinenträger aufweist. Über den Maschinenträger werden im Betrieb der Windenergieanlage sowohl statische Lasten, wie die Massen der vom Maschinenträger getragenen Bauteile, als auch dynamische Lasten aufgenommen, wie beispielsweise die auf die Rotorblätter einwirkende Windlast, und an den Turm übertragen. Jener Maschinenträger weist eine kompakte Tragstruktur mit einer im wesentlichen geschlossenwandigen Schalenstruktur auf, die dem Maschinenträger die notwendige Festigkeit zum Aufnehmen der im Betrieb auftretenden Belastungen verleiht. In der Schalenstruktur ist eine Öffnung ausgebildet, um vom Maschinenträger aus in den Innenraum der Gondel zu gelangen. Die Bewegungsfreiheit innerhalb der Gondel ist durch die Bauform des Maschinenträgers aber eingeschränkt, was die Wartung und Instandhaltung der Windenergieanlagen erschwert.

EP 2 740 928 A1 betrifft eine Windenergieanlage mit einem Maschinenträger, der auf einem Turm gelagert ist. Der Maschinenträger besitzt eine annähernd geschlossene Struktur mit einer die Antriebswelle umgebenden Wandung, wobei in der Wandung Durchbrechungen ausgebildet sind, über die ein Zugang zum Arbeitsbereich um die Rotorwelle und anderen Komponenten der Windenergieanlage möglich ist.

US 2016/131112 A1 bezieht sich auf einen Maschinenträger zum Befestigen eines Windkraftanlagenrotors an einem Windkraftanlagenturm. Der Maschinenträger weist einen ringförmigen Basisabschnitt als Verbindung zum Turm und einen ringförmigen Vertikalabschnitt als Verbindung zum Rotor auf. Der Basisabschnitt und der Vertikalabschnitt sind über seitliche Wandbereiche miteinander verbunden, die wegen der asymmetrisch auf den Maschinenträger einwirkenden Lasten bezogen auf ihren Querschnitt unterschiedlich ausgebildet sind. Die seitlichen Wandbereiche greifen auf einander gegenüberliegenden Seitenbereichen von Vertikalabschnitt und Basisabschnitt an.

Der Erfindung lag somit die Aufgabe zugrunde, einen Maschinenträger der eingangs bezeichneten Art dahingehend zu verbessern, dass die vorstehenden Nachteile möglichst weitgehend überwunden werden. Insbesondere lag der Erfindung die Aufgabe zugrunde, die Erreichbarkeit von benachbarten Bereichen des Maschinenträgers oder auch von Bereichen am Maschinenträger selbst zu vereinfachen, ohne dass am Maschinenträger Stabilitätseinbußen auftreten. Ferner lag der Erfindung insbesondere die Aufgabe zugrunde, einen Maschinenträger anzugeben, mit dem unvermindert hohe Lasten aufgenommen werden können, bei gleichzeitiger Reduzierung der Eigenmasse des Maschinenträgers.

Die Erfindung löst die ihr zugrundeliegende Aufgabe bei einem Maschinenträger der eingangs bezeichneten Art mit den Merkmalen von Anspruch 1..

Die Erfindung macht sich hierbei die Erkenntnis zunutze, dass eine Person, anstelle sich durch die rückseitige Durchtrittsöffnung Zutritt zu der Gondel verschaffen zu müssen, nunmehr auch über die seitliche Durchtrittsöffnung von dem Inneren der Tragstruktur unmittelbar in den seitlichen Bereich der Gondel um den Maschinenträger herum gelangen kann. Dadurch wird um ein Vielfaches einfacher, Zugang zum Azimutantrieb und/oder zum Azimuitlager der Windenergieanlage zu erhalten. Etwaige Wartungs- und Instandhaltungsarbeiten können nun sicherer und zügiger vorgenommen werden. Gleichzeitig wirken sich die Durchtrittsöffnungen gewichtsmindernd auf die Tragstruktur aus.

Unter einer seitlichen Durchtrittsöffnung ist vorliegend eine durchgehende Ausnehmung in der Tragstruktur zu verstehen, die durch eine Öffnungsbegrenzung definiert ist, wobei die Kante zu einer Ebene beabstandet ist, die von einer (vertikalen) Drehachse des Maschinenträgers und einer durch die zweite Schnittstelle am Maschinenträger verlaufenden (im Wesentlichen horizontalen) Längsachse des Antriebsstranges aufspannt wird. Die von der Drehachse des Maschinenträgers und der Längsachse der zweiten Schnittstelle gebildete Ebene wird also mit anderen Worten von der durch die Durchtrittsöffnung definierten freien Fläche nicht geschnitten. Vorzugsweise weist gemäß einer Weiterbildung die Tragstruktur mehrere, insbesondere zwei seitliche Durchtrittsöffnungen auf, die auf einander gegenüberliegenden Seiten der von der Drehachse und der durch die zweite Schnittstelle des Maschinenträgers verlaufende Längsachse aufgespannten Ebene liegen und beabstandet zu dieser sind.

Erfindungsgemäß weist die Tragstruktur mehrere erste Streben auf, welche von der ersten zur zweiten Schnittstelle verlaufen, wobei die Durchtrittsöffnung sich in Richtung der Strebe erstreckt und vorzugsweise zumindest bereichsweise von der ersten Strebe und von erster und/oder zweiter Schnittstelle begrenzt wird. Über die ersten Streben werden die voneinander beabstandeten Endbereiche von erster und zweiter Schnittstelle miteinander verbunden, wodurch Teile der an der zweiten Schnittstelle wirkenden Lasten direkt auf den hinteren Bereich der ersten Schnittstelle und dem damit gekoppelten Azimutlager am oberen Ende des Turmes übertragen werden. Vorzugsweise bilden die einander benachbarten Endbereiche von erster und zweiter Schnittstelle einen Hauptverbindungsbereich am Maschinenträger aus, von dem aus sich die mechanischen Schnittstellen des Maschinenträgers in verschiedene Richtungen erstrecken.

Vorliegend ist unter dem Begriff "vorderes Ende" der ersten Schnittstelle der Bereich des Maschinenträgers zu verstehen, in dem die zweite Schnittstelle zur Montage des Generators oder des Achszapfens zum Tragen des Generators angeordnet ist. Unter dem Begriff "hinteres Ende" der ersten Schnittstelle ist der Endbereich an der ersten Schnittstelle zu verstehen, der etwa gegenüberliegend zur zweiten Schnittstelle angeordnet ist.

Eine mögliche Weiterbildung des Maschinenträgers sieht vor, dass die erste und zweite Schnittstelle sich jeweils in einer Ebene aufspannen und die erste Strebe in einem Winkel geneigt zu den Schnittstellen-Ebenen verläuft, und vorzugsweise eine Verbindungsstrebe mit einem abschnittsweise gebogenen Verlauf ist. Vorzugsweise verläuft die erste Strebe mit einer im Wesentlichen gleichmäßig gerichteten Erstreckungsrichtung zu den Schnittstellen-Ebenen. Dadurch ist ein optimierter Kraftfluss bei der Kraftübertragung von der ersten in die zweite Schnittstelle und in umgekehrter Richtung am Maschinenträgers erreicht. Die erste mechanische Schnittstelle hat am Maschinenträger die Funktion eines Turmverbindungsabschnittes. Die zweite mechanische Schnittstelle am Maschinenträger hat die Funktion eines Montageabschnittes für den in der Gondel aufzunehmenden Antriebsstrang, bestehend zumindest aus Rotor, Rotornabe und Generator der Windenergieanlage.

Gemäß einer bevorzugten Ausgestaltung weist der Maschinenträger zwei erste Streben auf, die im Abstand zueinander zwischen den voneinander beabstandeten Endbereichen von erster und zweiter Schnittstelle verlaufen.

Erfindungemäß weist die Tragstruktur zudem eine oder mehrere zweite Streben auf, welche auf Höhe der ersten Schnittstelle und etwa parallel zur Ebene der ersten Schnittstelle verläuft. Die zweite Strebe ist als Verstärkungsstrebe für die erste Schnittstelle ausgebildet, welche vom vorderen Endbereich der ersten Schnittstelle zum gegenüberliegenden hinteren Endbereich der ersten Schnittstelle verläuft. Die Verstärkungsstrebe versteift die erste Schnittstelle und damit den Turmverbindungsabschnitt des Maschinenträgers. Gleichzeitig verteilt die zweite Strebe Teile der im Bereich der zweiten Schnittstelle eingeleiteten Kraft wiederum auf das gegenüberliegende, hintere Ende der Tragstruktur am Maschinenträger. Vorzugsweise sind an der Tragstruktur des Maschinenträgers mehrere, insbesondere zwei zweite Streben angeordnet. Vorzugsweise weist die Tragstruktur eine identische Anzahl von ersten und zweiten Streben auf.

Eine Weiterbildung der Erfindung sieht vor, dass die Durchtrittsöffnung von je einer ersten und zweiten Strebe bereichsweise begrenzt wird, wobei die erste und zweite Strebe eine Ebene aufspannen, die zur Drehachse der ersten Schnittstelle beabstandet ist und vorzugsweise etwa parallel verläuft, wobei weiter vorzugsweise die Enden der Streben im hinteren Endbereich der ersten Schnittstelle in einem Punkt zusammenlaufen. Auf diese Weise ist die Durchtrittsöffnung so ausgerichtet, dass ein einfaches Passieren für eine Person ermöglicht ist.

Vorzugsweise ist die eine, bzw. sind die mehreren Durchtrittsöffnungen jeweils, als Mannloch ausgebildet. Vorzugsweise weisen die Durchtrittsöffnungen ein Flächenmaß von größer 0,5 m², vorzugsweise ein Flächenmaß von größer 1 m², besonders bevorzugt ein Flächenmaß im Bereich von 1-2 m² auf.

Dadurch, dass die Enden von erster und zweiter Strebe im hinteren Endbereich der ersten Schnittstelle in einem Punkt zusammenlaufen, wird eine optimierte Krafteinleitung in das der zweiten Schnittstelle gegenüberliegende Ende des Maschinenträgers bewirkt. Spitzenlasten, die etwa über die zweite Schnittstelle eingeleitet werden, können somit gezielt abgefangen und zur ersten Schnittstelle hin übertragen werden. Vorzugsweise verlaufen die erste und die zweite Strebe, in Richtung der Drehachse der zweiten Schnittstelle gesehen, parallel zueinander, vorzugsweise deckungsgleich zueinander.

Gemäß einer bevorzugten Weiterbildung der Erfindung weist die Tragstruktur zwei Strebenpaare aus jeweils einer ersten und zweiten Strebe auf, welche Ebenen aufspannen, die in einem Winkel α im Bereich von 5 bis 25° zueinander verlaufen. Mithilfe der zwei Strebenpaare ist eine gleichmäßige Kraftverteilung möglicher an der ersten Schnittstelle eingeleiteter Lasten über den Umfang der ersten Schnittstelle und das damit verbundene Azimutlager bewirkt.

Vorzugsweise weist jedes Strebenpaar im Bereich der ersten Schnittstelle zwei Verbindungspunkte auf, wobei jeder Verbindungspunkt aus einem Ende einer der Streben des Strebenpaares gebildet wird. Die Verbindungspunkte sind vorzugsweise in Richtung der (vertikalen) Drehachse des Maschinenträgers voneinander beabstandet, mit anderen Worten in unterschiedlichen Höhen angeordnet.

Beide Streben des Strebenpaares verlaufen vorzugsweise geneigt zueinander, sodass sich die Streben am hinteren Endbereich der ersten Schnittstelle in einem Punkt vereinigen. Die Vereinigungspunkte der Strebenpaare weisen am hinteren Ende der ersten Schnittstelle vorzugsweise einen Abstand zueinander auf. Die einzelnen Verbindungspunkte der ersten und zweiten Streben sind vorzugsweise umfänglich gleichmäßig verteilt an der zweiten Schnittstelle angeordnet. Die zweite Schnittstelle ist vorzugsweise ring- oder flanschförmig ausgebildet. Durch die gleichmäßige Verteilung der Verbindungspunkte wird eine gleichmäßige Lastaufnahme begünstigt.

Die Tragstruktur weist vorzugsweise zwischen den ersten Streben und/oder zwischen den zweiten Streben jeweils eine weitere Durchtrittsöffnung als Zugang in den oder aus dem Maschinenträger auf.

Die Tragstruktur des Maschinenträgers ist vorzugsweise als Strebenstruktur mit einer Vielzahl von Durchtrittsöffnungen ausgebildet. Dies erleichtert den Zugang zu den verschiedenen Bereichen der Gondel weiter. Zudem ergibt sich durch die Ausgestaltung des Maschinenträgers mit seiner Strebenstruktur vorzugsweise ein verringertes Gesamtgewicht im Vergleich zu einem herkömmlichen Maschinenträger für eine Windenergieanlage gleicher Leistungsklasse. Der erfindungsgemäße Maschinenträger weist im Vergleich zu einem herkömmlichen Maschinenträger aufgrund der kraftflussorientierten Strebenstruktur vorzugsweise zumindest die gleiche oder eine erhöhte Festigkeit.

Vorzugsweise ist im Bereich der zweiten Schnittstelle ein sich zwischen der ersten und der zweiten Strebe erstreckendes Versteifungselement ausgebildet, welches die seitliche Durchtrittsöffnung neben der ersten und zweiten Strebe begrenzt. Vorzugsweise sind zu beiden Seiten der zweiten Schnittstelle solche Versteifungselemente dem jeweiligen mit der zweiten Schnittstelle verbundenen Strebenpaar zugeordnet. Das Versteifungselement ist einteilig mit der zweiten Schnittstelle verbunden und erstreckt sich auf der Innenseite zwischen der ersten und der zweiten Strebe und bildet mit diesen eine zusammenhängende Verstärkungsstruktur am Maschinenträger aus. In einer bevorzugten Ausgestaltung wird die seitliche Durchtrittsöffnung von Bereichen des Versteifungselementes sowie Abschnitten von erster und zweiter Strebe eines Strebenpaares der Tragstruktur begrenzt.

Gemäß einer bevorzugten Weiterbildung weist die Tragstruktur ferner einen Wandabschnitt auf, der die erste und zweite Schnittstelle zusätzlich miteinander verbindet. Vorzugsweise erstreckt sich der Wandabschnitt zumindest abschnittsweise kreisbogenförmig um die Drehachse der ersten Schnittstelle herum.

Zusätzlich zu der Strebenstruktur sind vorzugsweise die erste und zweite Schnittstelle über einen Wandabschnitt miteinander verbunden, wobei der Wandabschnitt dazu eingerichtet ist, etwaige Kräfte und/oder Momente aufzunehmen, die seitlich auf die Tragstruktur und/ oder um die Längsachse der zweiten Schnittstelle herum auftreten. Vorzugsweise erstreckt sich der Wandabschnitt zumindest im Bereich der ersten Schnittstelle auf einer Kreisbahn um die Drehachse der ersten Schnittstelle. Vorzugsweise ist der Wandabschnitt in sich gekrümmt. Durch die kreisbogenförmige, optional in sich gekrümmte Kontur weist der Wandabschnitt ein erhöhtes Flächenträgheitsmoment auf, sodass einer Verformung des Wandabschnittes durch darauf wirkende Lasten besser entgegengewirkt wird.

Vorzugsweise erstreckt sich der Wandabschnitt zu beiden Seiten der zweiten Schnittstelle entlang eines Abschnittes der Peripherie der ersten Schnittstelle, wobei weiter vorzugsweise die Wandhöhe von der zweiten Schnittstelle aus Wandhöhe abnimmt. Damit ist der Wandabschnitt vorrangig nur in dem Bereich des Maschinenträgers angeordnet, in dem er für eine Erhöhung der Festigkeit am dringendsten benötigt wird. Vorzugsweise nimmt die Wandhöhe des Wandabschnittes von der zweiten Schnittstelle in Richtung des hinteren Endbereiches an der ersten Schnittstelle kontinuierlich ab. Damit wird der Kraftfluss von der zweiten Schnittstelle in Richtung des hinteren Endbereiches der ersten Schnittstelle weiter verbessert und ermöglicht eine gleichmäßigere Lastverteilung an das Azimutlager am Turm der Windenergieanlage. Vorzugsweise erstreckt sich der Wandabschnitt mindestens entlang der Hälfte der Peripherie der ersten Schnittstelle, vorzugsweise etwa entlang von zwei Dritteln der Peripherie der ersten Schnittstelle.

Gemäß einer bevorzugten Ausgestaltung weist die erste Schnittstelle mehrere, vorzugsweise auf einem gemeinsamen Durchmesser um die Drehachse der ersten Schnittstelle herum angeordnete Aufnahmen für den Azimutantrieb auf. Die Aufnahmen sind vorzugsweise außenseitig von dem Wandabschnitt eingefasst. Weiter vorzugsweise weist die erste Schnittstelle zwischen der zweiten Strebe und den Aufnahmen eine Durchgriffsöffnung aufweist. Mithilfe der Aufnahmen am Maschinenträger können mehrere Antriebsmotoren an der ersten Schnittstelle befestigt werden und dienen dazu, den Maschinenträger um die Turmachse zu bewegen. Die Aufnahmen werden vorzugsweise zumindest abschnittsweise außenseitig von dem sich im Bereich der ersten Schnittstelle erstreckenden Wandabschnitt eingefasst. Damit ist der Azimutantrieb in Form seiner Antriebsmotoren auf der Innenseite des Wandabschnittes angeordnet und über die seitlichen Durchtrittsöffnungen in der Tragstruktur für das Wartungspersonal stets frei zugänglich.

Vorzugsweise ist zu beiden Seiten der durch die Drehachse der ersten Schnittstelle und der Längsachse der zweiten Schnittstelle aufgespannten Ebene jeweils eine gleiche Anzahl von Aufnahmen.

Eine bevorzugte Ausführungsform des Maschinenträgers weist zwischen der auf Höhe der ersten Schnittstelle verlaufenden zweiten Strebe und den Aufnahmen für den Azimutantrieb eine Durchgriffsöffnung auf. Über die Durchgriffsöffnung hat das Wartungspersonal Zugang zu den Antriebsmotoren des Azimutantriebes und/oder auf das Azimutlager am oberen Ende des Windenergieanlagenturmes. Die Durchgriffsöffnung weist vorzugsweise zumindest abschnittsweise die Form eines Kreissegmentes auf.

Eine Weiterbildung der Erfindung sieht vor, dass die Ebenen der ersten und zweiten Schnittstelle miteinander einen spitzen Winkel β > 80° aufspannen.

Die erste und/oder die zweite Schnittstelle weisen vorzugsweise einen Flansch als Verbindungs-/Kopplungsabschnitt auf.

Vorzugsweise verlaufen die Ebenen von erster und zweiter Schnittstelle in einem Winkel β in einem Bereich von 82° bis 88°. Dadurch ergibt sich vor allem in Kombination mit der Strebenstruktur des Maschinenträgers eine optimierte Kraftübertragung vom vorderen Endbereich zum hinteren Endbereich an der ersten Schnittstelle des Maschinenträgers.

Vorzugsweise weist die erste Schnittstelle einen Flansch als Verbindungsabschnitt mit dem Azimutlager der Windenergieanlage, und die zweite Schnittstelle einen Flansch als Kopplungsabschnitt für den am Maschinenträger aufzunehmenden Generatorstator oder einen Achszapfen zum Tragen eines Generators am Maschinenträger auf.

Vorzugsweise ist der Maschinenträger als Gussteil ausgebildet, wobei weiter vorzugsweise eine, mehrere oder sämtliche (der ersten und/oder zweiten) Streben der Tragstruktur einen Mittelsteg und zwei sich entlang der Längsseiten des Mittelsteges erstreckende Gurte aufweisen. Mit der Ausgestaltung als - vorzugweise einteiliges - Gussteil mit der ersten Schnittstelle und der zweiten Schnittstelle und insbesondere mit der Strebenstruktur kann eine hohe Festigkeit der Tragstruktur erreicht werden. Zudem sind die Flansche der ersten und/oder zweiten Schnittstelle vorzugsweise absatz- bzw. hinterschneidungsfrei an der Tragstruktur angeformt.

Gemäß einer bevorzugten Ausgestaltung weisen die eine, mehrere oder sämtliche, insbesondere die ersten und/oder zweiten, Streben der Tragstruktur im Querschnitt eine Form auf, welche im Wesentlichen einem I-Profil mit zwei Gurten entlang der Längsseiten entspricht. Vorzugsweise werden durch zumindest einen der Gurte an den Stegen zumindest abschnittsweise die seitlichen Durchtrittsöffnungen begrenzt. Vorzugsweise weisen die Gurte und der Mittelsteg der Streben einen abgerundeten Übergang auf, um die Kraftverläufe innerhalb der Tragstruktur zu verbessern und die Flächenträgheitsmomente der Streben weiter zu erhöhen.

Die Erfindung ist vorstehend anhand eines ersten Aspekts bezogen auf den Maschinenträger selbst beschrieben worden. Gemäß einem zweiten Aspekt betrifft die Erfindung ferner eine Windenergieanlage mit einem Turm und einem an dem Turm drehbar gelagerten Maschinenträger zum Aufnehmen eines Generators zur Erzeugung elektrischer Energie.

Die Erfindung löst die ihr zugrundeliegende Aufgabe bei einer solchen Windenergieanlage, indem der Maschinenträger nach einer der vorstehend beschriebenen bevorzugten Ausführungsformen ausgebildet ist.

Die Vorteile und bevorzugten Ausführungsformen des Maschinenträgers des ersten Aspekts sind zugleich Vorteile und bevorzugte Ausführungsformen der Windenergieanlage des zweiten Aspekts und umgekehrt, weswegen zur Vermeidung von Wiederholungen auf die obigen Ausführungen verwiesen wird.

Mit dem derart ausgebildeten Maschinenträger wird die Wartung der innerhalb der Gondel angeordneten Bauteile vereinfacht, da das Wartungspersonal über die seitlichen Durchtrittsöffnungen ohne großen Aufwand in den jeweils gewünschten Bereich der Gondel gelangen kann. Neben der verbesserten Zugänglichkeit der verschiedenen Gondelbereiche ermöglicht die Strebenstruktur am Maschinenträger zudem einen verbesserten Kraftfluss von der zweiten Schnittstelle des Maschinenträgers zu der ersten Schnittstelle hin. Zudem weist der Maschinenträger im Vergleich zu den herkömmlichen Maschinenträgern in der gleichen Leistungsklasse ein verringertes Gesamtgewicht auf. Die erfindungsgemäße Ausgestaltung ermöglicht die Konzeption und den Bau von größeren Maschinenträgern und damit größeren Anlagetypen, ohne etwaige vorgegebene oder zulässige Gewichtsgrenzen zu überschreiten.

Gemäß einer bevorzugten Ausgestaltung der Windenergieanlage ist vorgesehen, dass der Maschinenträger mit einem am oberen Ende des Turmes angeordneten Azimutlager gekoppelt ist, welches vorzugsweise einen mit dem Turm verbundenen feststehenden Innenring und einen drehbar dazu aufgenommenen Außenring aufweist, an dem der Maschinenträger befestigt ist, wobei vorzugsweise das Azimutlager eine Innenverzahnung am feststehenden Innenring aufweist, welche mit einem am Maschinenträger angeordneten Azimutantrieb zum Verstellen des Maschinenträgers relativ zum Turm zusammenwirkt. Das mit seinem feststehenden Innenring und seinem drehbar dazu aufgenommenen Außenring ausgebildete Azimutlager wird vorzugsweise ab Werk mit der ersten Schnittstelle des Maschinenträgers verschraubt. Die Montage des Azimutlagers, insbesondere das Verschrauben des Innenringes mit dem Kopf des Windenergieanlagenturmes, kann nunmehr von der Innenseite im Turm aus erfolgen. Das Herstellen der Verbindung zwischen dem Maschinenträger und dem Turm von dessen Außenseite her kann somit entfallen. Durch den nunmehr außenseitig umlaufenden bewegbaren Außenring sind damit einhergehend vorzugsweise die Abmessungen des Flanschs an der ersten Schnittstelle vergrößert.

Bei einer Ausgestaltung des Azimutlagers mit einer Innenverzahnung am feststehenden Innenring verlagert sich der Azimutantrieb entsprechend radial weiter nach innen. Die Anordnung der Antriebsmotoren an der ersten Schnittstelle hat somit keinen Einfluss auf die äußeren Abmessungen der Tragstruktur des Maschinenträgers mehr.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Windenergieanlage zum Erzeugen elektrischer Energie;
- Fig. 2:: eine perspektivische Ansicht eines aus dem Stand der Technik bekannten Maschinenträgers;
- Fig. 3:: eine perspektivische Ansicht eines Maschinenträgers gemäß einer Ausführungsform der Erfindung;
- Fig. 4:: eine weitere perspektivische Ansicht der Ausführungsform eines Maschinenträgers gemäß Fig.3;
- Fig. 5:: eine Draufsicht des Maschinenträgers gemäß Fig.3;
- Fig. 6:: eine Ansicht eines Maschinenträgers gemäß Fig. 3, montiert auf einem Azimutlager; und
- Fig. 7:: eine Ansicht der in Fig. 6 gezeigten Einkreisung VII.

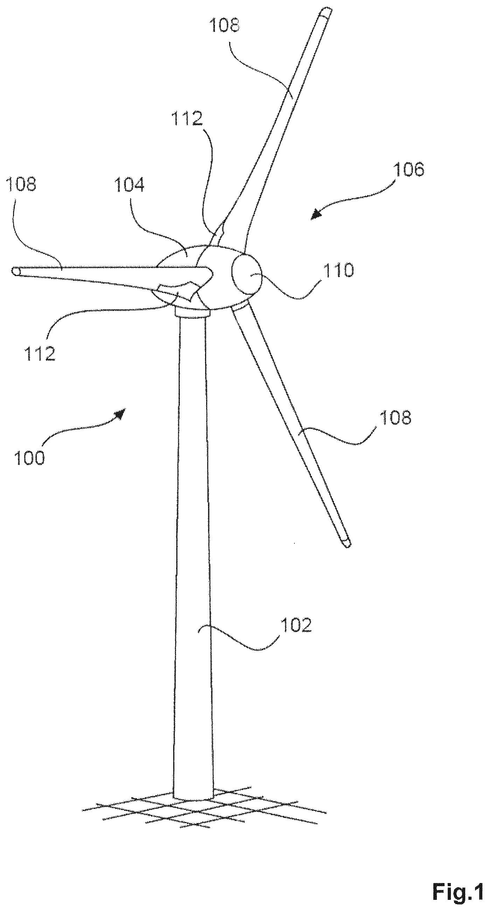

Fig. 1 zeigt eine Windenergieanlage 100 mit einem Turm 102 und einer Gondel 104. An der Gondel 104 ist eine Rotornabe 106 mit drei Rotorblättern 108 und einem Spinner 110 angeordnet. Die Rotorblätter 108 sind mit ihren Rotorblattwurzeln an der Rotornabe 106 angeordnet. Die Rotornabe 106 wird im Betrieb durch die auf die Rotorblätter wirkende Luftströmung in eine Drehbewegung versetzt und treibt dadurch einen nicht näher dargestellten Generator an, der innerhalb der Gondel 104 angeordnet ist.

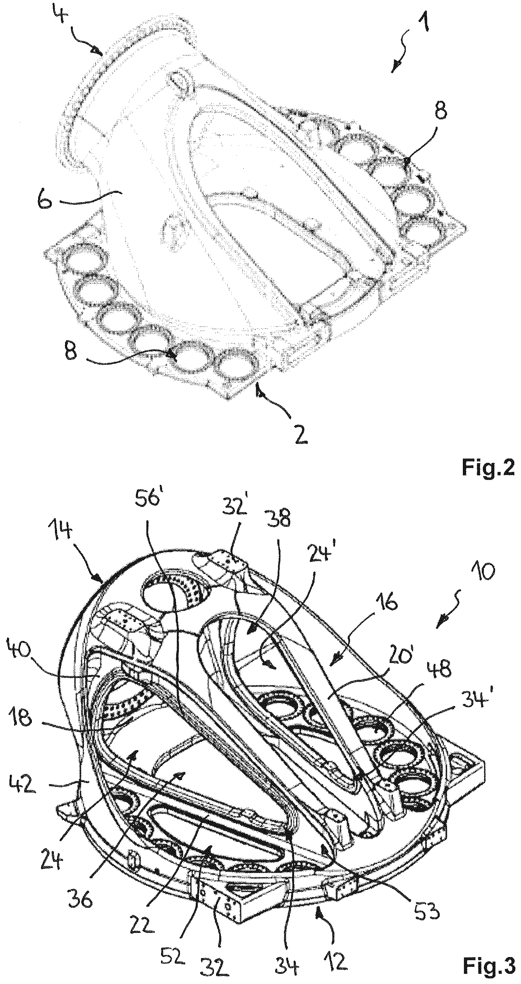

Um die Gondel 104 mit dem Turm 102 der Windenergieanlage 100 zu koppeln, wurde im Stand der Technik ein in Fig. 2 gezeigter Maschinenträger 1 verwendet. Der Maschinenträger 1 wies eine erste mechanische Schnittstelle 2 zum Verbinden des Maschinenträgers 1 mit einem Azimutlager an der Windenergieanlage und eine zweite mechanische Schnittstelle 4 zur Montage eines Generators oder eines Achszapfens an dem Maschinenträger auf. Die erste Schnittstelle 2, ausgebildet als eine Art Kopplungsplatte, und die zweite Schnittstelle 4, ausgebildet als Montageflansch, waren über eine nahezu durchgängig geschlossene Wand- bzw. Schalenstruktur 6 miteinander verbunden. An der ersten Schnittstelle 2 waren mehrere Aufnahmen 8 für Antriebsmotoren eines an der ersten Schnittstelle 2 zu montierenden Azimutantriebes vorgesehen. Wie Fig. 2 zeigt, waren die Aufnahmen 8 um die Außenseite der Wand- oder Schalenstruktur 6 herum angeordnet; um an die Antriebsmotoren des Azimutantriebes zu gelangen, musste das Wartungspersonal sich zwischen die Außenseite der Wand- oder Schalenstruktur 6 und die den Maschinenträger umgebende, nicht dargestellte Gondelverkleidung begeben, was aufgrund des begrenzten Platzangebotes oft nicht einfach ist.

Fig. 3 zeigt im Gegensatz zu Fig. 2 einen Maschinenträger 10 gemäß der vorliegenden Erfindung, der eine erste mechanische Schnittstelle 12 zum mittelbaren oder unmittelbaren Verbinden des Maschinenträgers mit einem Azimutlager aufweist. Der Maschinenträger 10 umfasst ferner eine zweite Schnittstelle 14 zur Montage eines Generators oder eines Achszapfens der Windenergieanlage an dem Maschinenträger 10. Der Maschinenträger 10 weist eine Tragstruktur 16 auf, mittels der die erste Schnittstelle 12 und die zweite Schnittstelle 14 miteinander verbunden sind. Die Tragstruktur 16 weist einen Hauptverbindungsbereich 18 von erster und zweiter Schnittstelle auf.

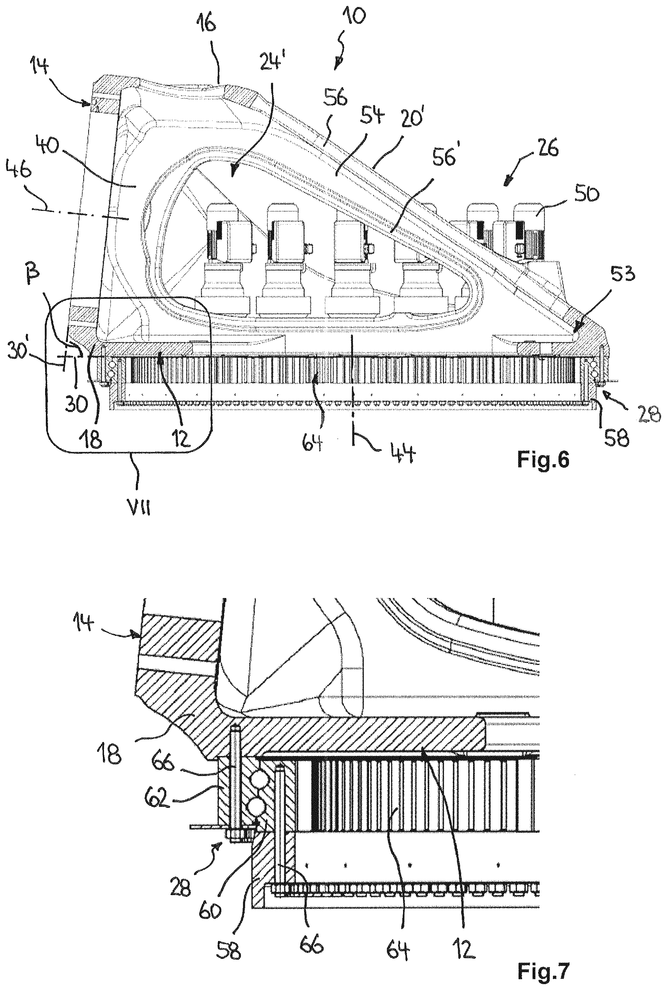

Die Tragstruktur 16 weist ferner mehrere Streben 20, 20', 22, 22' auf, welche von der ersten Schnittstelle 12 zur zweiten Schnittstelle 14 verlaufen. Zudem weist die Tragstruktur 16 mehrere seitliche Durchtrittsöffnungen 24, 24' als Zugang zu einem Azimutantrieb 26 und/oder einem mit der ersten Schnittstelle 12 verbundenen Azimutlager 28 (Fig. 6 und 7) auf.

Die erste und zweite Schnittstelle 12, 14 spannen sich jeweils entlang einer Ebene 30, 30' auf. Die Tragstruktur 16 weist mehrere erste Streben 20, 20' auf, welche die dem Hauptverbindungsbereich 18 gegenüberliegenden Endbereiche von erster und zweiter Schnittstelle 12, 14 miteinander verbinden. Die Tragstruktur 16 weist ferner mehrere zweite Streben 22, 22', welche auf Höhe der ersten Schnittstelle etwa parallel zur Ebene 30 der ersten Schnittstelle 12 verlaufen. Die zweiten Streben 22, 22' sind als Verstärkungsstreben für die erste Schnittstelle 12 ausgebildet.

Die seitlichen Durchtrittsöffnungen 24, 24' erstrecken sich in Richtung der jeweils zugeordneten ersten Strebe 20, 20' und/oder zweiten Strebe 22, 22'. In einer Ausführungsform des Maschinenträgers 10 wird die seitliche Durchtrittsöffnung bereichsweise von der ersten Strebe 20, 20' und von der ersten und/oder zweiten Schnittstelle 12, 14 begrenzt. In einer weiteren Ausführungsform des Maschinenträgers 10 wird die seitliche Durchtrittsöffnung 24, 24' von je einer ersten und einer zweiten Strebe 20, 22; 20', 22' begrenzt.

Am Maschinenträger 10, insbesondere an der Peripherie des Maschinenträgers, sind mehrere Kopplungsabschnitte 32, 32' ausgebildet, über die Teile oder Abschnitte von einem die Gondel 104 tragenden Gestell montiert oder befestigt werden können. Wie aus Fig. 3 ferner ersichtlich, weist die Tragstruktur 10 zwei Strebenpaare 34, 34' aus jeweils einer ersten und einer zweiten Strebe 20, 22; 20', 22' auf.

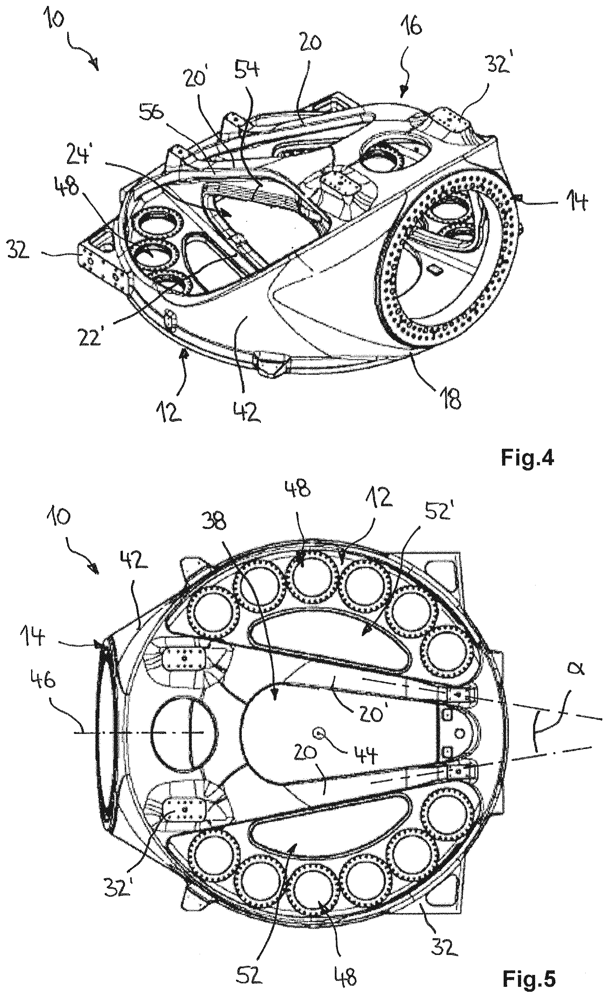

Wie die Fig. 3 und 5 verdeutlichen, weist die Tragstruktur zwischen den ersten Streben 20, 20' und/oder zwischen den zweiten Streben 22, 22' jeweils eine weitere Durchtrittsöffnung 36,38 als Zugang in oder aus dem Maschinenträger 10 auf. Insbesondere gelangt das Wartungspersonal über die Durchtrittsöffnung 36 aus dem Inneren des Turmes 102 in den Maschinenträger 10 und von da aus über die Durchtrittsöffnungen 24, 24', 38 in die übrigen Bereiche der Gondel 104. Auf der dem Innenraum des Maschinenträgers 10 zugewandten Innenseite der zweiten Schnittstelle 14 ist ein sich zwischen der ersten und der zweiten Strebe 20, 22; 20', 22' erstreckendes Versteifungselement 40 ausgebildet, welches neben der ersten und zweiten Strebe die seitlichen Durchtrittsöffnungen 24, 24' begrenzt.

Wie aus Fig. 4 ersichtlich, weist die Tragstruktur 16 einen Wandabschnitt 42 auf, der die erste und zweite Schnittstelle 12, 14 zusätzlich miteinander verbindet. In einer Ausführung des Maschinenträgers 10 erstreckt sich der Wandabschnitt 42 abschnittsweise kreisförmig um eine von der ersten Schnittstelle 12 gebildete Drehachse 44 (Fig. 5, 6). Die zweite Schnittstelle 14 weist eine Längsachse 46 auf, welche durch die Drehachse 44 verläuft. Die Drehachse 44 und die Längsachse 46 verlaufen in einen Winkel zueinander, der ungleich 90° ist.

Die Drehachse 44 und die Längsachse 46 spannen eine Ebene auf, wobei die seitlichen Durchtrittsöffnungen 24, 24' beabstandet dazu angeordnet sind. Ferner erstreckt sich der Wandabschnitt 42 zu beiden Seiten der zweiten Schnittstelle 14 entlang eines Abschnittes der Peripherie der ersten Schnittstelle 12. Von der ersten Schnittstelle aus verringert sich dabei die Wandhöhe des Wandabschnittes in Richtung des hinteren Endbereiches an der ersten Schnittstelle 12.

Die erste Schnittstelle 12 umfasst ferner mehrere, vorzugsweise auf einem gemeinsamen Durchmesser um die Drehachse 44 der ersten Schnittstelle herum angeordnete Aufnahmen 48 für einen Azimutantrieb. Die Aufnahmen 48 werden außenseitig von dem Wandabschnitt 42 eingefasst, vgl. Fig. 3 bis 5.

Die erste Schnittstelle 12 weist vorzugsweise zwischen den Aufnahmen 48 und den zweiten Streben 14 der Tragstruktur 16 Durchgriffsöffnungen 52, 52' auf. Wie ferner aus Fig. 5 ersichtlich, spannen die erste und die zweite Strebe 20, 22; 20', 22' eine Ebene auf, die zur Drehachse der ersten Schnittstelle 12 im Abstand und etwa parallel verläuft. Fig. 4 zeigt weiterhin, dass die Enden von erster und zweiter Strebe 20, 22; 20', 22' im hinteren Endbereich der ersten Schnittstelle 12 in einem Vereinigungspunkt 53 zusammenlaufen.

Die Strebenpaare 34, 34' der Tragstruktur 16 spannen jeweils Ebenen auf, die in einem Winkel α im Bereich von 5 bis 25° zueinander verlaufen. Ausgehend von der zweiten Schnittstelle 14 verringert sich der Abstand zwischen den Strebenpaaren 34, 34' in Richtung des Endbereiches der ersten Schnittstelle kontinuierlich. Die Vereinigungspunkte 53 der Strebenpaare sind jedoch im Endbereich der ersten Schnittstelle im Abstand zueinander angeordnet. Das Abstandsmaß beträgt etwa einem Drittel des Durchmessers der zweiten Schnittstelle 14.

Der Maschinenträger 10 ist als Gussteil ausgebildet. Der Maschinenträger 10 ist inkl. der Tragstruktur 16 und der daran ausgebildeten ersten und zweiten Schnittstelle 12, 14 aus einem Stück gefertigt, vorzugsweise als Gussteil. Die ersten und/oder zweiten Streben 20, 20', 22, 22' weisen einen Mittelsteg 54 und zwei sich entlang der Längsseiten des Mittelsteges 54 erstreckende Gurte 56, 56' auf.

Fig. 6 zeigt eine Seitenansicht des Maschinenträgers 10 im Schnitt, welcher mit seiner ersten Schnittstelle 12 mit dem Azimutlager 28 verbunden ist, über das der Maschinenträger 10 bewegbar zum Turm 102 der Windenergieanlage 100 ist. Zum Bewegen des Maschinenträgers und der mit dem Maschinenträger 10 gekoppelten Gondel 104 wird ein Azimutantrieb 26 mit mehreren Antriebsmotoren 50 verwendet.

Wie aus Fig. 6 ferner ersichtlich, verlaufen die ersten Streben 20, 20' in einem Winkel geneigt zu den Schnittstellen-Ebenen 30, 30' von erster und zweiter Schnittstelle 12, 14. Die Ebenen 30, 30' von erster und zweiter Schnittstelle 12, 14 verlaufen zueinander in einem spitzen Winkel β größer 80°. Die erste und zweite Schnittstelle 12, 14 umfassen jeweils einen Flansch als Verbindungs-/Kopplungsabschnitt mit dem Azimutlager 28 oder einem nicht näher gezeigten Generator, insbesondere einem Generatorstator.

In Fig. 7 ist der Verbindungsbereich zwischen der ersten Schnittstelle 12 und dem Azimutlager 26 im Detail gezeigt. Das Azimutlager 26 weist einen fest mit dem oberen Segment 58 des Turmes 102 verbundenen Innenring 60 und einen drehbar am Innenring 60 aufgenommenen Außenring 62 auf. Der Außenring 62 ist mit der ersten Schnittstelle 12 über eine Vielzahl von Schraubverbindungen 66 befestigt. Der feststehende Innenring 60 weist eine Innenverzahnung 64 auf, mit der der an der ersten Schnittstelle aufgenommene Azimutantrieb 26, insbesondere die Antriebsmotoren 50, zusammenwirken. Eine Drehbewegung der Antriebsmotoren bewirkt eine Verstellbewegung des Maschinenträgers 10 relativ zum feststehenden Innenring 60 des Azimutlagers 28.

Auch der Innenring 60 ist, wie aus Fig. 7 ersichtlich, über eine Vielzahl von Schraubverbindungen 66 mit dem oberen Segment 58 des Turmes 102 verbunden. Wie ferner ersichtlich, ist das Azimutlager mit seinem Innenring von der Innenseite des Turmes 102 aus mit dem oberen Segment 58 verschraubt.

### Bezugszeichenliste:

- 1, 10: Maschinenträger
- 2, 12: erste Schnittstelle
- 4, 14: zweite Schnittstelle
- 6: Wand-/Schalenstruktur
- 8: Aufnahme
- 16: Tragstruktur
- 18: Hauptverbindungsbereich
- 20, 20': erste Strebe
- 22, 22': zweite Strebe
- 24, 24': Durchtrittsöffnung
- 26: Azimutantrieb
- 28: Azimutlager
- 30, 30': Ebene
- 32, 32': Kopplungsabschnitt
- 34, 34': Strebenpaar
- 36, 38: Durchtrittsöffnung
- 40: Versteifungselement
- 42: Wandabschnitt
- 44: Drehachse
- 46: Längsachse
- 48: Aufnahme
- 50: Antriebsmotoren
- 52, 52': Durchgriffsöffnung
- 53: Vereinigungspunkt
- 54: Mittelsteg
- 56, 56': Gurt
- 58: Segment
- 60: Innenring
- 62: Außenring
- 64: Innenverzahnung
- 66: Schraubverbindung
- 100: Windenergieanlage
- 102: Turm
- 104: Gondel
- 106: Rotornabe
- 108: Rotorblatt
- 110: Spinner

## Patentansprüche

1. Maschinenträger (10) für eine Windenergieanlage (100), insbesondere getriebelose Windenergieanlage (100), wobei der Maschinenträger (10) dazu eingerichtet ist, mittels eines Azimutantriebes (26) um eine Turmachse gedreht zu werden, und
eine Tragstruktur (16) aufweist, die
eine erste mechanische Schnittstelle (12) zum mittelbaren oder unmittelbaren Verbinden des Maschinenträgers (10) mit einem Azimutlager (28) und
eine zweite mechanische Schnittstelle (14) zur Montage eines Generators oder eines Achszapfens an dem Maschinenträger (10) aufweist,
wobei die Tragstruktur (16) eine oder mehrere seitliche Durchtrittsöffnungen (24, 24') als Zugang zu dem Azimutantrieb (26) und/oder dem Azimutlager (28) aufweist,
wobei die Tragstruktur (16) ein oder mehrere erste Streben (20, 20') aufweist, welche von der ersten (12) zur zweiten Schnittstelle (14) verlaufen, wobei die Durchtrittsöffnung (24, 24') sich in Richtung der Strebe (20, 20') erstreckt,
**dadurch gekennzeichnet, dass** über die ersten Streben (20, 20') die voneinander beabstandeten Endbereiche von erster und zweiter Schnittstelle (12, 14) miteinander verbunden werden, und
wobei die Tragstruktur (16) eine oder mehrere zweite Streben (22, 22') aufweist, welche auf Höhe der ersten Schnittstelle (12) und etwa parallel zur Ebene (30, 30') der ersten Schnittstelle (12) verläuft und als Verstärkungsstrebe für die erste Schnittstelle (12) ausgebildet ist.

2. Maschinenträger (10) nach Anspruch 1,
wobei die Durchtrittsöffnung (24, 24') zumindest bereichsweise von der ersten Strebe (20, 20') und von erster (12) und/oder zweiter Schnittstelle (14) begrenzt wird.

3. Maschinenträger (10) nach Anspruch 1 oder 2,
wobei die erste (12) und zweite Schnittstelle (14) sich jeweils in einer Ebene (30, 30') aufspannen und die erste Strebe (20, 20') in einem Winkel geneigt zu den Schnittstellen-Ebenen (30, 30') verläuft und vorzugsweise eine Verbindungsstrebe (20, 20') mit einem abschnittsweise gebogenen Verlauf ist.

4. Maschinenträger (10) nach einem der Ansprüche 1 bis 3,
wobei die Durchtrittsöffnung (24, 24') von je einer ersten (20, 20') und zweiten Strebe (22, 22') bereichsweise begrenzt wird, wobei die erste (20, 20') und zweite Strebe (22, 22') eine Ebene (30, 30') aufspannen, die zur Drehachse (44) der ersten Schnittstelle (12) im Abstand und etwa parallel verläuft, wobei vorzugsweise die Enden von erster (20, 20') und zweiter Strebe (22, 22') in einem Endbereich der ersten Schnittstelle (12) in einem Punkt zusammenlaufen.

5. Maschinenträger (10) nach einem der Ansprüche 1 bis 4,
wobei die Tragstruktur (16) zwei Strebenpaare (34, 34') aus jeweils einer ersten (20, 20') und zweiten Strebe (22, 22') aufweist, welche Ebenen (30, 30') aufspannen, die in einem Winkel α im Bereich von 5 bis 25° zueinander verlaufen.

6. Maschinenträger (10) nach einem der Ansprüche 1 bis 5,
wobei die Tragstruktur (16) zwischen den ersten Streben (20, 20') und/oder zwischen den zweiten Streben (22, 22') jeweils eine weitere Durchtrittsöffnung (36, 38) als Zugang in oder aus dem Maschinenträger (10) aufweist.

7. Maschinenträger (10) nach einem der Ansprüche 1 bis 6,
wobei im Bereich der zweiten Schnittstelle (14) ein sich zwischen der ersten (20, 20') und der zweiten Strebe (22, 22') erstreckendes Versteifungselement (40) ausgebildet ist, welches die seitliche Durchtrittsöffnung (24, 24') neben der ersten (20, 20') und zweiten Strebe (22, 22') begrenzt.

8. Maschinenträger (10) nach einem der Ansprüche 1 bis 7,
wobei die Tragstruktur (16) ferner einen Wandabschnitt (42) aufweist, der die erste (12) und zweite Schnittstelle (14) zusätzlich miteinander verbindet und sich vorzugsweise zumindest abschnittsweise etwa kreisförmig um die Drehachse (44) der ersten Schnittstelle (12) herum erstreckt.

9. Maschinenträger (10) nach Anspruch 8,
wobei der Wandabschnitt (42) sich zu beiden Seiten der zweiten Schnittstelle (14) entlang eines Abschnittes der Peripherie der ersten Schnittstelle (12) erstreckt, mit vorzugsweise einer von der zweiten Schnittstelle (14) aus abnehmenden Wandhöhe.

10. Maschinenträger (10) nach einem der Ansprüche 1 bis 9,
wobei die erste Schnittstelle (12) mehrere, vorzugsweise auf einem gemeinsamen Durchmesser um die Drehachse (44) der ersten Schnittstelle (12) herum angeordnete, Aufnahmen (48) für den Azimutantrieb (26) aufweist, welche vorzugsweise außenseitig von dem Wandabschnitt (42) eingefasst werden, und wobei die erste Schnittstelle (12) weiter vorzugsweise zwischen der zweiten Strebe (22, 22') und den Aufnahmen (48) eine Durchgriffsöffnung (52, 52') aufweist.

11. Maschinenträger (10) nach einem der Ansprüche 1 bis 10,
wobei die Ebenen (30, 30') von erster (12) und zweiter Schnittstelle (14) zueinander einen spitzen Winkel β > 80° verlaufen.

12. Maschinenträger (10) nach einem der vorstehenden Ansprüche,
ausgebildet als Gussteil, wobei vorzugsweise eine, mehrere oder sämtliche Streben (20, 20', 22, 22') der Tragstruktur (16) einen Mittelsteg (54) und zwei sich entlang der Längsseiten des Mittelsteges (54) erstreckende Gurte (56, 56') aufweisen.

13. Windenergieanlage (100), mit
einem Turm (102), und
einem an dem Turm (102) drehbar gelagerten Maschinenträger (10) zum Aufnehmen zumindest eines Generators zur Erzeugung elektrischer Energie,
wobei der Maschinenträger (10) nach einem der vorstehenden Ansprüche ausgebildet ist.

14. Windenergieanlage (100) nach Anspruch 13,
dass der Maschinenträger (10) mit einem am oberen Ende des Turmes (102) angeordneten Azimutlager (28) gekoppelt ist, welches vorzugsweise einen mit dem Turm (102) verbundenen, feststehenden Innenring (60) und einen drehbar dazu aufgenommenen Außenring (62) aufweist, an dem der Maschinenträger (10) befestigt ist, wobei das Azimutlager (28) vorzugsweise eine Innenverzahnung (64) am feststehenden Innenring (60) aufweist, welche mit einem am Maschinenträger (10) angeordneten Azimutantrieb (26) zum Verstellen des Maschinenträgers (10) relativ zum Turm (102) zusammenwirkt.

## Claims

1. Machine support (10) for a wind power installation (100), in particular a gear-less wind power installation (100), wherein the machine support (10) is designed to be rotated about a tower axis by means of an azimuth drive (26), and
has a supporting structure (16) which
has a first mechanical interface (12) for connecting the machine support (10) indirectly or directly to an azimuth bearing (28) and a second mechanical interface (14) for assembling a generator or an axle journal on the machine support (10),
wherein the supporting structure (16) has one or a plurality of lateral through openings (24, 24') as access to the azimuth drive (26) and/or to the azimuth bearing (28),
wherein the supporting structure (16) has one or a plurality of first struts (20, 20') that run from the first (12) to the second interface (14), wherein the through opening (24, 24') extends in the direction of the strut (20, 20'),
**characterized in that** the spaced-apart end regions of the first and second interfaces (12, 14) are connected to each other via the first struts (20, 20') and
wherein the supporting structure (16) has one or a plurality of second struts (22, 22') which run/runs at the height level of the first interface (12) and approximately parallel to the plane (30, 30') of the first interface (12), and is configured as a reinforcement strut for the first interface (12).

2. Machine support (10) according to Claim 1,
wherein the through opening (24, 24') is at least partly delimited by the first strut (20, 20') and by the first (12) and/or the second interface (14).

3. Machine support (10) according to Claim 1 or 2,
wherein the first (12) and the second interface (14) each are defined in a plane (30, 30'), and the first strut (20, 20') runs so as to be inclined at an angle to the interface planes (30, 30') and preferably is a connecting strut (20, 20') having a partially curved profile.

4. Machine support (10) according to any one of Claims 1 to 3,
wherein the through opening (24, 24') in regions is in each case delimited by a first (20, 20') and a second strut (22, 22'), wherein the first (20, 20') and the second strut (22, 22') define a plane (30, 30') that runs so as to be spaced apart from and approximately parallel to the rotation axis (44) of the first interface (12), wherein the ends of the first (20, 20') and of the second strut (22, 22') preferably converge in a point in an end region of the first interface (12).

5. Machine support (10) according to any one of Claims 1 to 4,
wherein the supporting structure (16) has two pairs of struts (34, 34') composed in each case of one first (20, 20') and one second strut (22, 22') which define planes (30, 30') that run at a mutual angle α in the range from 5 to 25°.

6. Machine support (10) according to any one of Claims 1 to 5,
wherein the supporting structure (16) between the first struts (20, 20') and/or between the second struts (22, 22') has in each case a further through opening (36, 38) as access to or from the machine support (10).

7. Machine support (10) according to any one of Claims 1 to 6,
wherein a reinforcement element (40) which extends between the first (20, 20') and the second strut (22, 22') and delimits the lateral through opening (24, 24') next to the first (20, 20') and the second strut (22, 22') is configured in the region of the second interface (14).

8. Machine support (10) according to any one of Claims 1 to 7,
wherein the supporting structure (16) furthermore has a wall portion (42) which additionally connects the first (12) and the second interface (14) to one another and preferably at least in portions extends in an approximately circular manner about the rotation axis (44) of the first interface (12).

9. Machine support (10) according to Claim 8,
wherein the wall portion (42), along a portion of the periphery of the first interface (12), preferably by way of a wall height that decreases from the second interface (14), extends on both sides of the second interface (14).

10. Machine support (10) according to any one of Claims 1 to 9,
wherein the first interface (12) has a plurality of receptacles (48) for the azimuth drive (26) which are preferably disposed on a common diameter about the rotation axis (44) of the first interface (12) and are preferably externally encased by the wall portion (42), and wherein the first interface (12) between the second strut (22, 22') and the receptacles (48) furthermore preferably has an engagement opening (52, 52').

11. Machine support (10) according to any one of Claims 1 to 10,
wherein the planes (30, 30') of the first (12) and of the second interface (14) run at a mutual acute angle β > 80°.

12. Machine support (10) according to any one of the preceding claims,
configured as a casting, wherein preferably one, a plurality or all of the struts (20, 20', 22, 22') of the supporting structure (16) have a central web (54) and two bands (56, 56') extending along the longitudinal sides of the central web (54).

13. Wind power installation (100), having
a tower (102) and
a machine support (10), which is rotatably mounted on the tower (102), for receiving at least one generator for generating electric power, wherein the machine support (10) is configured according to any one of the preceding claims.

14. Wind power installation (100) according to Claim 13,
**characterized in that** the machine support (10) is coupled to an azimuth bearing (28) which is disposed on the upper end of the tower (102) and preferably has a stationary inner ring (60) connected to the tower (102) and an outer ring (62) which is received so as to be rotatable in relation to said inner ring (60) and to which the machine support (10) is fastened,
wherein the azimuth bearing (28) on the stationary inner ring (60) preferably has an internal toothing (64) which, for adjusting the machine support (10) relative to the tower (102), interacts with an azimuth drive (26) disposed on the machine support (10).

## Revendications

1. Support de machine (10) pour une éolienne (100), en particulier une éolienne sans réducteur (100), dans lequel le support de machine (10) est mis au point pour être tourné autour d'un axe de tour au moyen d'un entraînement azimutal (26), et
présente une structure porteuse (16), qui présente une première interface mécanique (12) pour relier indirectement ou directement le support de machine (10) à un palier d'azimut (28) et
une deuxième interface mécanique (14) pour le montage d'un générateur ou d'un axe d'essieu sur le support de machine (10),
dans lequel la structure porteuse (16) présente une ou plusieurs ouvertures de passage latérales (24, 24') comme accès à l'entraînement azimutal (26) et/ou au palier d'azimut (28),
dans lequel la structure porteuse (16) présente une ou plusieurs premières entretoises (20, 20'), qui s'étendent de la première (12) à la deuxième interface (14), dans lequel l'ouverture de passage (24, 24') s'étend en direction de l'entretoise (20, 20'),
**caractérisé en ce que** les zones d'extrémité espacées les unes des autres de la première et la deuxième interface (12, 14) sont reliées entre elles par l'intermédiaire des premières entretoises (20, 20'), et
dans lequel la structure porteuse (16) présente une ou plusieurs deuxièmes entretoises (22, 22') qui s'étendent au niveau de la première interface (12) et à peu près parallèlement au plan (30, 30') de la première interface (12), et qui sont réalisées comme des entretoises de renfort pour la première interface (12).

2. Support de machine (10) selon la revendication 1,
dans lequel l'ouverture de passage (24, 24') est délimitée au moins par endroits par la première entretoise (20, 20') et par la première (12) et/ou la deuxième interface (14).

3. Support de machine (10) selon la revendication 1 ou 2,
dans lequel la première (12) et la deuxième interface (14) se tendent respectivement dans un plan (30, 30') et la première entretoise (20, 20') s'étend selon un angle de manière inclinée par rapport aux plans d'interface (30, 30') et est de préférence une entretoise de liaison (20, 20') avec un tracé courbé par sections.

4. Support de machine (10) selon l'une quelconque des revendications 1 à 3,
dans lequel l'ouverture de passage (24, 24') est délimitée par endroits par une première (20, 20') et une deuxième entretoise (22, 22'), dans lequel la première (20, 20') et la deuxième entretoise (22, 22') forment un plan (30, 30'), qui s'étend à distance et à peu près parallèlement à l'axe de rotation (44) de la première interface (12), dans lequel de préférence les extrémités de la première (20, 20') et de la deuxième entretoise (22, 22') coïncident en un point dans une zone d'extrémité de la première interface (12).

5. Support de machine (10) selon l'une quelconque des revendications 1 à 4,
dans lequel la structure porteuse (16) présente deux paires d'entretoises (34, 34') composées chacune d'une première (20, 20') et d'une deuxième entretoise (22, 22'), qui forment des plans (30, 30') qui s'étendent selon un angle a dans la plage de 5 à 25° les uns par rapport aux autres.

6. Support de machine (10) selon l'une quelconque des revendications 1 à 5,
dans lequel la structure porteuse (16) présente respectivement une autre ouverture de passage (36, 38) comme accès dans ou hors du support de machine (10) entre les premières entretoises (20, 20') et/ou entre les deuxièmes entretoises (22, 22').

7. Support de machine (10) selon l'une quelconque des revendications 1 à 6,
dans lequel un élément de raidissement (40) s'étendant entre la première (20, 20') et la deuxième entretoise (22, 22') est réalisé dans la zone de la deuxième interface (14), lequel délimite l'ouverture de passage latérale (24, 24') à côté de la première (20, 20') et de la deuxième entretoise (22, 22').

8. Support de machine (10) selon l'une quelconque des revendications 1 à 7,
dans lequel la structure porteuse (16) présente en outre une section de paroi (42) qui relie la première (12) et la deuxième interface (14) en supplément l'une à l'autre et s'étend de préférence, au moins par sections, de manière presque circulaire autour de l'axe de rotation (44) de la première interface (12).

9. Support de machine (10) selon la revendication 8,
dans lequel la section de paroi (42) s'étend des deux côtés de la deuxième interface (14) le long d'une section de la périphérie de la première interface (12), de préférence avec une hauteur de paroi décroissante à partir de la deuxième interface (14).

10. Support de machine (10) selon l'une quelconque des revendications 1 à 9,
dans lequel la première interface (12) présente plusieurs logements (48) pour l'entraînement d'azimut (26), disposés de préférence sur un diamètre commun autour de l'axe de rotation (44) de la première interface (12), qui sont enserrés de préférence à l'extérieur par la section murale (42), et dans lequel la première interface (12) présente en outre de préférence une ouverture de passage (52, 52') entre la deuxième entretoise (22, 22') et les logements (48).

11. Support de machine (10) selon l'une quelconque des revendications 1 à 10,
dans lequel les plans (30, 30') de la première (12) et de la deuxième interface (14) forment entre eux un angle aigu β > 80°.

12. Support de machine (10) selon l'une quelconque des revendications précédentes,
réalisé en pièce moulée, dans lequel de préférence une, plusieurs ou l'ensemble des entretoises (20, 20', 22, 22') de la structure porteuse (16) présente(nt) une nervure centrale (54) et deux sangles (56, 56') s'étendant le long des côtés longitudinaux de la nervure centrale (54).

13. Éolienne (100), avec
une tour (102), et
un support de machine (10) monté de manière rotative sur la tour (102) pour recevoir au moins un générateur destiné à la production d'énergie électrique,
dans laquelle le support de machine (10) est réalisé selon l'une quelconque des revendications précédentes.

14. Éolienne (100) selon la revendication 13,
**caractérisée en ce que** le support de machine (10) est couplé à un palier d'azimut (28) disposé sur l'extrémité supérieure de la tour (102), lequel présente de préférence une bague intérieure fixe (60) reliée à la tour (102) et une bague extérieure (62) logée en rotation par rapport à celle-ci, sur laquelle le support de machine (10) est fixé, dans laquelle le palier d'azimut (28) présente de préférence une denture intérieure (64), sur la bague intérieure fixe (60), qui coopère avec un entraînement d'azimut (26) disposé sur le support de machine (10) pour l'ajustement du support de machine (10) par rapport à la tour (102).
